# EUROPEAN PATENT SPECIFICATION

(11) **EP 4 382 323 B1**
(45) Date of publication and mention of the grant of the patent: **01.04.2026**
(21) Application number: 23213481.7
(22) Date of filing: 30.11.2023
(51) Int. Cl.: B60D 1/64, H01R 13/70

(54) **ELECTRICAL CONNECTOR FOR A WORK VEHICLE**
ELEKTRISCHER VERBINDER FÜR EIN ARBEITSFAHRZEUG
CONNECTEUR ÉLECTRIQUE POUR UN VÉHICULE DE TRAVAIL

(30) Priority: 06.12.2022 IT 202200025107
(43) Date of publication of application: 12.06.2024
(73) Proprietor: CNH Industrial Italia S.p.A., 10156 Torino (IT)
(72) Inventor: BORGHI, Alberto, 10156 Turin (IT); TEDONE, Antonio, 70017 Putignano (IT)
(74) Representative: CNH Industrial IP Department

(56) References cited:
- DE-A1- 102007 024 644
- DE-U1- 20 210 684
- DE-U1- 202011 051 955
- US-A1- 2002 157 932

## Description

### TECHNICAL FIELD

The present invention concerns an electrical connector for a work vehicle, in particular an electrical connector for connecting a work vehicle and an element to be connected to a work vehicle.

The present invention finds its preferred, although not exclusive, application in an electrical connector for an agricultural vehicle, such as a tractor. Reference will be made to this application by way of example below.

### BACKGROUND OF THE INVENTION

As is known, an agricultural vehicle, such as a tractor, is configured to be connected to one or more elements, such as a trailer and/or a plurality of implements, e.g. a plough, a cultivator, a mulcher, a disk harrow or a power harrow.

Typically, such elements are carried by the tractor at its front portion and/or rear portion.

Conveniently, such elements can be electrically connected to the tractor, i.e. the tractor can be configured to provide power to such elements via respective electrical connectors. Document US 2002/157932 A1 discloses an electrical connector known in the prior art.

For example, according to some regulations (e.g. AEF and ISO), the tractor can be configured to provide power to each element connected thereto via a respective high-voltage power line. Each high-voltage power line is associated to a respective high-voltage interlock loop (HVIL) line. In particular, a HVIL line is a safety feature which protects people during the assembly, repair, maintenance and operation of the tractor, i.e. anyone who might come into contact with high-voltage components of the tractor at any stage in its lifecycle.

Each HVIL line goes from the high-voltage components of the tractor through the respective electrical connector to the high-voltage components of the respective aforementioned element (e.g. trailer or implement). The purpose of each HVIL line is to detect if the respective electrical connector or component is open. In such a case, the respective high-voltage power line is opened so as to avoid the risk of electrocution.

The system described above has several disadvantages.

In particular, since a single HVIL line would cause the entire tractor to de-energise and stop working whenever such HVIL line is open, several separate HVIL lines are necessary.

Therefore, many mechanical and electrical components are required to guarantee safety. Increasing the number of components means having higher development and production costs, as well as lower reliability. An increase in mechanical and electrical complexity implies a higher probability of mechanical and electrical failure.

Furthermore, controlling many components requires a complex control architecture. An increase in control complexity implies a higher probability of control failure.

Therefore, the need is felt to reduce complexity while guaranteeing safety.

An aim of the present invention is to satisfy the above-mentioned need in a cost-effective and optimised manner.

### SUMMARY OF THE INVENTION

The aforementioned aim is reached by an electrical connector for a work vehicle and a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- figure 1 is a side view of a work vehicle connected to an element and comprising electrical connectors according to the invention;
- figure 2 is a front view of the electrical connector of figure 1, with parts removed for the sake of clarity; and
- figure 3 is a perspective view of the electrical connector of figure 1.

### DETAILED DESCRIPTION OF THE INVENTION

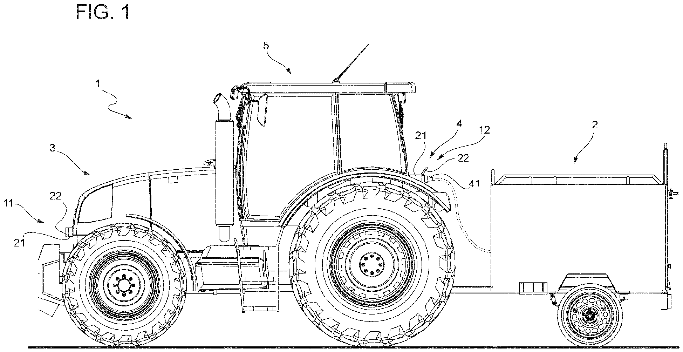

Figure 1 shows a work vehicle 1 connected to an element 2. In particular, the vehicle 1 is an agricultural vehicle, such as a tractor, and the element 2 is a trailer.

The vehicle 1 is of known type and comprises a front portion 3, a rear portion 4, and a cab 5 for a user of the vehicle 1.

In the exemplarily shown embodiment, the vehicle 1 is configured to be connected to a first element (now shown) and a second element 2, such as the aforementioned trailer. Each of the first element and the second element 2 may be a trailer or an implement, e.g. a plough, a cultivator, a mulcher, a disk harrow or a power harrow.

Conveniently, the first element can be carried by the vehicle 1 at its front portion 3 and the second element 2 can be carried by the vehicle 1 at its rear portion 4.

The vehicle 1 is configured to be selectively connected to each of the first element and second element 2. Therefore, at a given time instant, the vehicle 1 may be connected to none of the first element and the second element 2, only one of them or both of them. For example, the vehicle 1 of figure 1 is not connected to the first element (which is indeed not shown) and is connected to the second element 2.

Conveniently, the vehicle 1 is configured to be selectively electrically connected to the first element and the second element 2, i.e. the vehicle is configured to provide power (i.e. electrical power) to such elements via respective power lines (i.e. electrical circuits) and electrical connectors, as described in detail hereinafter.

In particular, the vehicle 1 comprises two power lines (not shown), i.e. a first power line and a second power line, and is configured to provide power to the first element via the first power line and to provide power to the second element 2 via the second power line. Conveniently, each power line is a high-voltage power line, e.g. according to regulations (e.g. AEF and ISO).

Furthermore, the vehicle 1 comprises a safety line (not shown). In particular, the safety line is a safety feature configured to avoid the risk of electrocution and comprising an electrical circuit which can be either open or closed, as described in detail hereinafter. Conveniently, the safety line is a high-voltage interlock loop (HVIL) line.

Conveniently, the vehicle 1 comprises an electronic control unit comprising processing means configured to interact with the first power line, the second power line and the safety line.

The vehicle 1 also comprises two electrical connectors, i.e. a first connector 11 and a second connector 12, and is configured to be selectively electrically connected to the first element via the first connector 11 and to the second element 2 via the second connector 12.

In particular, the first connector 11 is associated to the first power line and the second connector 12 is associated with the second power line. Conveniently, the safety line is common to the first connector 11 and the second connector 12. In particular, the safety line goes through the first connector 11 to the first element and through the second connector 12 to the second element 2.

Conveniently, the first connector 11 is located in the front portion 3 of the vehicle 1 and the second connector 12 is located in the rear portion 4 of the vehicle 1.

The first connector 11 and the second connector 12 have similar, and potentially identical, shape and operating principles. Therefore, for the sake of conciseness, only the second connector 12 is described hereinafter. The description of the first connector 11 is the same as that of the second connector 12 provided that:
- "second connector 12" is replaced with "first connector 11";
- "second element 2" (and each sub-element thereof) is replaced with "first element" (and each sub-element thereof); and
- "second power line" is replaced with "first power line".

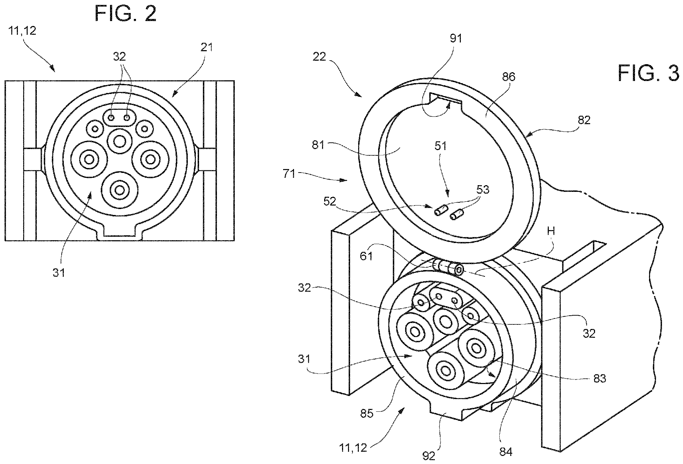

The second connector 12 (figures 2 and 3), which is configured to be selectively electrically connected to the second element 2, comprises a main element 21 and a movable element 22, movable with respect to the main element 21.

The main element 21 is configured to be carried by the vehicle 1 and to define an interface for the second power line and the safety line.

For this purpose, the main element 21 comprises a plurality of electrical contacts 31 of (i.e. belonging to) the second power line and two electrical contacts 32 of (i.e. belonging to) the safety line.

Conveniently, the second element 2 comprises a connectable part 41 configured to be coupled to the main element 21 of the second connector 12 and thus comprising electrical contacts (not shown) complementary to the electrical contacts 31, 32 of the main element 21 of the second connector 12. Therefore, if an electrical contact of the main element 21 is a male contact, i.e. a pin, the respective electrical contact of the connectable part 41 is a female contact, i.e. a hole, and vice versa.

In the exemplarily shown embodiment, the main element 21 of the second connector 12 is a socket and the connectable part 41 of the second element 2 is a plug, thus jointly defining a "plug and socket" system. In particular, the two electrical contacts 32 of the safety line of the main element 21 are female contacts.

Conveniently, the movable element 22 is movably carried by the main element 21.

The movable element 22 is movable between a first configuration and a second configuration.

In particular, the movable element 22 is configured to allow access to the interface for the second power line and the safety line in the first configuration, and to prevent access to the interface for the second power line and the safety line in the second configuration.

Conveniently, the movable element 22 in the second configuration is configured to close the safety line.

In particular, the movable element 22 comprises electrically conducting means 51 configured to electrically connect, i.e. allow electrical connection between, the two electrical contacts 32 of the safety line of the main element 21 when the movable element 22 is in the second configuration.

In the exemplarily shown embodiment (figure 3), the electrically conducting means 51 comprise an electrical jumper 52 configured to close the safety line when the movable element 22 is in the second configuration. In particular, the electrical jumper 52 comprises two pins 53 configured to contact the two electrical contacts 32 of the safety line when the movable element 22 is in the second configuration. Conveniently, the two pins 53 are parallel and the distance therebetween is equal to the distance between the two electrical contacts 32. Therefore, the electrical jumper 52 is configured to act as a short-circuit bridge between the two electrical contacts 32, thus allowing electrical connection therebetween and contributing to close the safety line, which may anyway be open because other portions thereof are open, as described in detail hereinafter.

Conveniently, the movable element 22 is pivotable with respect to the main element 21. In particular, the movable element 22 is hinged to the main element 21 via hinge means 61 carried by the main element 21 and can thus move between the first configuration and the second configuration.

Preferably, the main element 21 and the movable element 22 define a form-fitting coupling in the second configuration, thus jointly defining a closed structure when the movable element 22 is in the second configuration.

Conveniently, the movable element 22 comprises a lid 71, which has a first side 81, facing towards the main element 21 when the movable element 22 is in the second configuration, and a second side 82 opposite to the first side 81. The first side 81 carries the electrically conducting means 51, in particular the pins 53.

Preferably, the main element 21 defines a cavity 83 and the electrically conducting means 51 are located in the cavity 83 when the movable element 22 is in the second configuration.

In the exemplarily shown embodiment (figure 3), the main element 21 comprises a cylindrical wall 84 defining the cavity 83 and having a free edge 85, and the lid 71 has a circular shape and a circumferential projection 86 extending from the perimeter of the first side 81. Conveniently, the projection 86 faces towards, and is in contact with, the free edge 85 of the cylindrical wall 84 when the movable element 22 is in the second configuration. Preferably, the hinge means 61 are arranged externally to the free edge 74 and define a hinge axis H orthogonal to that of the cylindrical wall 73. The lid 71 is configured to rotate about the axis H so that the cavity 83 is left open in the first configuration and closed in the second configuration. The pins 53 are dimensioned and arranged in the lid 71 so that, when the movable element 22 is in the second configuration, they engage the electrical contacts 32, which are located in the cavity 83.

Conveniently, the lid 71 is configured to snap open and close. For this purpose, in the exemplarily shown embodiment, the projection 86 of the lid 71 has a groove 91 and the cylindrical wall 84 has a rib 92 configured to engage the groove 91 when the movable element 22 is in the second configuration.

Considering the second connector 12 and the second element 2 (jointly referred to as "second connector-element pair" hereinafter), three situations can occur. In particular, the second connector-element pair can be in "condition A", "condition B", or "condition C", wherein:
- Second connector-element pair in condition A: The movable element 22 of the second connector 12 is in the first configuration and the connectable part 41 of the second element 2 is not coupled to the main element 21 of the second connector 12. Therefore, the electrical contacts 32 of the safety line are not in contact with the respective electrical contacts of the connectable part 41 of the second element 2.
- Second connector-element pair in condition B: The movable element 22 of the second connector 12 is in the first configuration and the connectable part 41 of the second element 2 is coupled to the main element 21 of the second connector 12. Therefore, the electrical contacts 32 of the safety line are in contact with the respective electrical contacts of the connectable part 41 of the second element 2.
- Second connector-element pair in condition C: The movable element 22 of the second connector 12 is in the second configuration, and thus the connectable part 41 of the second element 2 is not coupled to the main element 21 of the second connector 12. Therefore, the electrical contacts 32 of the safety line are in contact with the pins 53 of the movable element 22 of the second connector 12.

The same applies, mutatis mutandis, to the first connector 11 and the first element (jointly referred to as "first connector-element pair" hereinafter), i.e. the first connector-element pair can be in "condition A", "condition B", or "condition C".

Considering both the first connector-element pair and the second connector-element pair, nine situations can occur. For example, in figure 1 the first connector-element pair is in condition C and the second connector-element pair is in condition B.

At a given time instant, the safety line is either open or closed depending on the situation, i.e. the conditions of the first connector-element pair and the second connector-element pair, at that time instant.

In particular:
- if at least one of the first connector-element pair and the second connector-element pair is in condition A, the safety line is open;
- if both the first connector-element pair and the second connector-element pair are in condition B, the safety line is closed;
- if (as in figure 1) one connector-element pair is in condition B and the other connector-element pair is in condition C, the safety line is closed.

Therefore, the safety line is open if and only if at least one of the first connector-element pair and the second connector-element pair is in condition A.

What has been described above considering two connector-element pairs can be generalised to a plurality, i.e. an arbitrary number ***n* ≥ 2,** of connector-element pairs.

Therefore, the invention also relates to a vehicle 1 which comprises ***n* ≥ 2** connectors as described above and is configured to be selectively electrically connected to ***n*** elements as described above via the respective ***n*** connectors. The vehicle 1 comprises ***n*** power lines and a safety line, and is configured to provide power to each of the ***n*** elements via a respective power line of the ***n*** power lines. Conveniently, the safety line is common to all the ***n*** connectors.

Considering all the ***n*** connector-element pairs, 3*ⁿ* situations can occur.

At a given time instant, the safety line is either open or closed depending on the situation, i.e. the conditions of the ***n*** connector-element pairs, at that time instant.

In particular:
- if at least one of the ***n*** connector-element pairs is in condition A, the safety line is open;
- if all the ***n*** connector-element pairs are in condition B, the safety line is closed;
- if ***m*** (wherein **1 ≤ *m* < *n*)** connector-element pair(s) is/are in condition B and ***n - m*** connector-element pair(s) is/are in condition C, the safety line is closed.

Therefore, the safety line is open if and only if at least one of the ***n*** connector-element pairs is in condition A.

The operation of the embodiment of the invention as described above is the following.

Any connector (e.g. the first connector 11 of figure 1) without an element electrically connected thereto is left with the movable element 22 in the second configuration.

When the vehicle 1 needs to be electrically connected to an element (e.g. the second element 2 of figure 1), it is sufficient to couple the connectable part 41 of such element to the main element 21 of a connector (e.g. the second connector 12) of the vehicle 1. In particular, the movable element 22 is moved from the second configuration to the first configuration, and then the connectable part 41 is coupled to the main element 21.

Similarly, when the vehicle 1 needs to be electrically disconnected from an element (e.g. the second element 2), it is sufficient to decouple the connectable part 41 of such element from the main element 21 of the respective connector (e.g. the second connector 12) of the vehicle 1. In particular, the connectable part 41 is decoupled from the main element 21, and then the movable element 22 is moved from the first configuration to the second configuration.

The vehicle 1, via the electronic control unit, continuously controls the power lines based on whether the safety line is open or closed. In particular, if the safety line is open, the power lines are opened so as to avoid the risk of electrocution, thus complying with safety requirements. Instead, if the safety line is closed, the vehicle 1 can provide power to each element connected thereto via the respective power line and electrical connector.

In view of the foregoing, the advantages of the vehicle 1 and connectors 11, 12 according to the invention are apparent.

Each connector 11, 12 allows to easily act on the safety line, via movement of the movable element 22 between the first configuration and the second configuration.

Furthermore, when the movable element 22 is in the second configuration, it also acts as a mechanical protection, e.g. from dust and water.

The vehicle 1 comprising two connectors 11, 12 allows to reduce complexity while guaranteeing safety. Indeed, instead of requiring two safety lines for the respective power lines, a single safety line is sufficient. Such single safety line, common to both the first connector 11 and the second connector 12, allows e.g. to provide power to an element connected to the first connector 11 if the movable element 22 of the second connector 12 is in the second configuration, and vice versa.

Therefore, fewer mechanical and electrical components are necessary, and the control is simplified.

Furthermore, these advantages increase as the number of connectors increases, since a single safety line, common to all the connectors, is always sufficient.

It is clear that modifications can be made to the described vehicle 1 and connectors 11, 12 which do not extend beyond the scope of protection defined by the claims.

For example, the shape of the connectors 11, 12 may be different from that described, and the movable element 22 may be carried by the vehicle 1, e.g. via connecting means, such as a chain, having one end attached to a portion of the vehicle 1 and another end attached to the movable element 22.

Furthermore, the plurality of electrical contacts 31 may be of any type, the electrically conducting means 51 may be female contacts and the electrical contacts 32 may be male contacts.

## Claims

1. Electrical connector for a work vehicle (1), the work vehicle (1) being configured to be selectively electrically connected to an element (2), wherein the connector (11; 12) comprises a main element (21) and a movable element (22),
wherein the main element (21) is configured to be carried by the work vehicle (1) and to define an interface for a power line and a safety line, the work vehicle (1) being configured to provide power to said element (2) via the power line,
wherein the movable element (22) is movable between a first configuration and a second configuration,
wherein the movable element (22) is configured to selectively close the safety line in one between the first and second configuration,
wherein the movable element (22) comprises electrically conducting means (51),
said electrical connector is **characterized in that** the electrically conducting means (51) comprise an electrical jumper (52).

2. Connector as claimed in claim 1, wherein the movable element (22) is movably carried by the main element (21).

3. Connector as claimed in claim 1, wherein the electrical jumper (52) is configured to close the safety line if the movable element (22) is in the second configuration.

4. Connector as claimed in claim 1 to 3, wherein the electrical jumper (52) comprises two pins (53) and the main element (21) comprises two electrical contacts (32), said pins (53) being configured to contact said electrical contacts (32) in the second configuration.

5. Connector as claimed in any of the preceding claims, wherein the movable element (22) is pivotable with respect to the main element (21).

6. Connector as claimed in any of the preceding claims, wherein the main element (21) and the movable element (22) define a form-fitting coupling in the second configuration.

7. Connector as claimed in any of the preceding claims, wherein the movable element (22) comprises a lid (71).

8. Connector as claimed in claim 7 when dependent on any of claims 3 to 8, wherein the electrically conducting means (51) are carried by a side (81) of the lid (71) facing towards the main element (21) in the second configuration.

9. Connector as claimed in claim 8, wherein the main element (21) defines a cavity (83) and the electrically conducting means (51) are located in the cavity (83) in the second configuration.

10. Connector as claimed in any of claims 7 to 9, wherein the lid (71) is configured to snap open and close.

11. Work vehicle comprising a first connector (11) and a second connector (12) as claimed in any of the preceding claims, the work vehicle (1) being configured to be selectively electrically connected to a first element via the first connector (11) and to a second element (2) via the second connector (12),
wherein the work vehicle (1) comprises a first power line, a second power line and a safety line,
wherein the work vehicle (1) is configured to provide power to the first element via the first power line and to provide power to the second element (2) via the second power line,
wherein the safety line is common to the first connector (11) and the second connector (12).

12. Work vehicle as claimed in claim 11, wherein the work vehicle (1) is configured to provide power to the first element if the movable element (22) of the second connector (12) is in the second configuration.

13. Work vehicle as claimed in claim 11 or 12, wherein the safety line is a high-voltage interlock loop line.

14. Work vehicle comprising a plurality of connectors as claimed in any of claims 1 to 10, the work vehicle (1) being configured to be selectively electrically connected to a plurality of elements via respective connectors (11, 12) of said plurality of connectors,
wherein the work vehicle (1) comprises a plurality of power lines and a safety line,
wherein the work vehicle (1) is configured to provide power to each of said elements via a respective power line of said plurality of power lines,
wherein the safety line is common to all said connectors (11, 12).

## Patentansprüche

1. Elektrischer Verbinder für ein Arbeitsfahrzeug (1), wobei das Arbeitsfahrzeug (1) dazu konfiguriert ist, selektiv elektrisch mit einem Element (2) verbunden zu werden, wobei der Verbinder (11; 12) ein Grundelement (21) und ein bewegliches Element (22) umfasst,
wobei das Grundelement (21) dazu konfiguriert ist, von dem Arbeitsfahrzeug (1) getragen zu werden und eine Schnittstelle für eine Stromleitung und eine Sicherheitsleitung zu definieren, wobei das Arbeitsfahrzeug (1) dazu konfiguriert ist, dem Element (2) über die Stromleitung Strom bereitzustellen,
wobei das bewegliche Element (22) zwischen einer ersten Konfiguration und einer zweiten Konfiguration beweglich ist,
wobei das bewegliche Element (22) dazu konfiguriert ist, die Sicherheitsleitung in einer zwischen der ersten und zweiten Konfiguration selektiv zu schließen,
wobei das bewegliche Element (22) elektrisch leitende Mittel (51) umfasst,
der elektrische Verbinder **dadurch gekennzeichnet ist, dass** die elektrisch leitenden Mittel (51) eine elektrische Überbrückung (52) umfassen.

2. Verbinder nach Anspruch 1, wobei das bewegliche Element (22) beweglich von dem Grundelement (21) getragen wird.

3. Verbinder nach Anspruch 1, wobei die elektrische Überbrückung (52) dazu konfiguriert ist, die Sicherheitsleitung zu schließen, wenn sich das bewegliche Element (22) in der zweiten Konfiguration befindet.

4. Verbinder nach Anspruch 1 bis 3, wobei die elektrische Überbrückung (52) zwei Stifte (53) umfasst und das Grundelement (21) zwei elektrische Kontakte (32) umfasst, wobei die Stifte (53) dazu konfiguriert sind, die elektrischen Kontakte (32) in der zweiten Konfiguration zu kontaktieren.

5. Verbinder nach einem der vorstehenden Ansprüche, wobei das bewegliche Element (22) in Bezug auf das Grundelement (21) schwenkbar ist.

6. Verbinder nach einem der vorstehenden Ansprüche, wobei das Grundelement (21) und das bewegliche Element (22) eine formschlüssige Kupplung in der zweiten Konfiguration definieren.

7. Verbinder nach einem der vorstehenden Ansprüche, wobei das bewegliche Element (22) einen Deckel (71) umfasst.

8. Verbinder nach Anspruch 7, wenn abhängig von einem der Ansprüche 3 bis 8, wobei die elektrisch leitenden Mittel (51) von einer Seite (81) des Deckels (71) getragen werden, die in der zweiten Konfiguration dem Grundelement (21) zugewandt ist.

9. Verbinder nach Anspruch 8, wobei das Grundelement (21) einen Hohlraum (83) definiert und die elektrisch leitenden Mittel (51) in der zweiten Konfiguration in dem Hohlraum (83) angeordnet sind.

10. Verbinder nach einem der Ansprüche 7 bis 9, wobei der Deckel (71) dazu konfiguriert ist, auf- und zuzuschnappen.

11. Arbeitsfahrzeug, das einen ersten Verbinder (11) und einen zweiten Verbinder (12) nach einem der vorstehenden Ansprüche umfasst, wobei das Arbeitsfahrzeug (1) dazu konfiguriert ist, selektiv elektrisch mit einem ersten Element über den ersten Verbinder (11) und mit einem zweiten Element (2) über den zweiten Verbinder (12) verbunden zu werden,
wobei das Arbeitsfahrzeug (1) eine erste Stromleitung, eine zweite Stromleitung und eine Sicherheitsleitung umfasst,
wobei das Arbeitsfahrzeug (1) dazu konfiguriert ist, dem ersten Element über die erste Stromleitung Strom zuzuführen und dem zweiten Element (2) über die zweite Stromleitung Strom zuzuführen,
wobei die Sicherheitsleitung dem ersten Verbinder (11) und dem zweiten Verbinder (12) gemein ist.

12. Arbeitsfahrzeug nach Anspruch 11, wobei das Arbeitsfahrzeug (1) dazu konfiguriert ist, dem ersten Element Strom bereitzustellen, wenn sich das bewegliche Element (22) des zweiten Verbinders (12) in der zweiten Konfiguration befindet.

13. Arbeitsfahrzeug nach Anspruch 11 oder 12, wobei die Sicherheitsleitung eine Hochspannungsverriegelungsschleifenleitung ist.

14. Arbeitsfahrzeug, das eine Vielzahl von Verbindern nach einem der Ansprüche 1 bis 10 umfasst, wobei das Arbeitsfahrzeug (1) dazu konfiguriert ist, selektiv elektrisch mit einer Vielzahl von Elementen über jeweilige Verbinder (11, 12) der Vielzahl von Verbindern verbunden zu werden,
wobei das Arbeitsfahrzeug (1) eine Vielzahl von Stromleitungen und eine Sicherheitsleitung umfasst,
wobei das Arbeitsfahrzeug (1) konfiguriert ist, um jedem der Elemente über eine jeweilige Stromleitung der Vielzahl von Stromleitungen Strom bereitzustellen,
wobei die Sicherheitsleitung allen Verbindern (11, 12) gemein ist.

## Revendications

1. Connecteur électrique pour un véhicule de travail (1), le véhicule de travail (1) étant configuré pour être sélectivement connecté électriquement à un élément (2), dans lequel le connecteur (11 ; 12) comprend un élément principal (21) et un élément mobile (22),
dans lequel l'élément principal (21) est conçu pour être porté par le véhicule de travail (1) et pour définir une interface pour une ligne de puissance et une ligne de sécurité, le véhicule de travail (1) étant configuré pour fournir de la puissance audit élément (2) par l'intermédiaire de la ligne de puissance,
dans lequel l'élément mobile (22) est mobile entre une première configuration et une seconde configuration,
dans lequel l'élément mobile (22) est conçu pour fermer sélectivement la ligne de sécurité dans l'une entre la première et la seconde configuration,
dans lequel l'élément mobile (22) comprend des moyens électriquement conducteurs (51),
ledit connecteur électrique est **caractérisé en ce que** les moyens électriquement conducteurs (51) comprennent un cavalier électrique (52).

2. Connecteur selon la revendication 1, dans lequel l'élément mobile (22) est porté de manière mobile par l'élément principal (21).

3. Connecteur selon la revendication 1, dans lequel le cavalier électrique (52) est conçu pour fermer la ligne de sécurité si l'élément mobile (22) est dans la seconde configuration.

4. Connecteur selon la revendication 1 à 3, dans lequel le cavalier électrique (52) comprend deux broches (53) et l'élément principal (21) comprend deux contacts électriques (32), lesdites broches (53) étant configurées pour entrer en contact avec lesdits contacts électriques (32) dans la seconde configuration.

5. Connecteur selon l'une quelconque des revendications précédentes, dans lequel l'élément mobile (22) peut pivoter par rapport à l'élément principal (21).

6. Connecteur selon l'une quelconque des revendications précédentes, dans lequel l'élément principal (21) et l'élément mobile (22) définissent un accouplement par complémentarité de forme dans la seconde configuration.

7. Connecteur selon l'une quelconque des revendications précédentes, dans lequel l'élément mobile (22) comprend un couvercle (71).

8. Connecteur selon la revendication 7 lorsqu'elle dépend de l'une quelconque des revendications 3 à 8, dans lequel les moyens électriquement conducteurs (51) sont portés par un côté (81) du couvercle (71) tourné vers l'élément principal (21) dans la seconde configuration.

9. Connecteur selon la revendication 8, dans lequel l'élément principal (21) définit une cavité (83) et les moyens électriquement conducteurs (51) sont situés dans la cavité (83) dans la seconde configuration.

10. Connecteur selon l'une quelconque des revendications 7 à 9, dans lequel le couvercle (71) est conçu pour s'ouvrir et se fermer par encliquetage.

11. Véhicule de travail comprenant un premier connecteur (11) et un second connecteur (12) selon l'une quelconque des revendications précédentes, le véhicule de travail (1) étant configuré pour être sélectivement connecté électriquement à un premier élément par l'intermédiaire du premier connecteur (11) et à un second élément (2) par l'intermédiaire du second connecteur (12),
dans lequel le véhicule de travail (1) comprend une première ligne de puissance, une seconde ligne de puissance et une ligne de sécurité,
dans lequel le véhicule de travail (1) est configuré pour fournir de la puissance au premier élément par l'intermédiaire de la première ligne de puissance et pour fournir de la puissance au second élément (2) par l'intermédiaire de la seconde ligne électrique,
dans lequel la ligne de sécurité est commune au premier connecteur (11) et au second connecteur (12).

12. Véhicule de travail selon la revendication 11, dans lequel le véhicule de travail (1) est configuré pour fournir de la puissance au premier élément si l'élément mobile (22) du second connecteur (12) est dans la seconde configuration.

13. Véhicule de travail selon la revendication 11 ou 12, dans lequel la ligne de sécurité est une ligne de boucle d'interverrouillage haute tension.

14. Véhicule de travail comprenant une pluralité de connecteurs selon l'une quelconque des revendications 1 à 10, le véhicule de travail (1) étant configuré pour être connecté électriquement de manière sélective à une pluralité d'éléments par l'intermédiaire de connecteurs (11, 12) respectifs de ladite pluralité de connecteurs,
dans lequel le véhicule de travail (1) comprend une pluralité de lignes de puissance et une ligne de sécurité,
dans lequel le véhicule de travail (1) est configuré pour fournir de la puissance à chacun desdits éléments par l'intermédiaire d'une ligne de puissance respective de ladite pluralité de lignes de puissance,
dans lequel la ligne de sécurité est commune à tous lesdits connecteurs (11, 12).
